# EUROPEAN PATENT SPECIFICATION

(11) **EP 2 140 758 B1**
(45) Date of publication and mention of the grant of the patent: **20.03.2013**
(21) Application number: 09164428.6
(22) Date of filing: 02.07.2009
(51) Int. Cl.: A01K 5/00, A01F 29/00

(54) **Apparatus for separating and mixing feed for livestock**
Anlage und Verfahren zum Trennen und Mischen von Viehfutter
Appareil et procédé pour séparer et mélanger des produits pour l'alimentation du bétail

(30) Priority: 04.07.2008 NL 2001757
(43) Date of publication of application: 06.01.2010
(60) Divisional application: 11176824.8
(73) Proprietor: Trioliet Mullos B.V., 7575 BE Oldenzaal (NL)
(72) Inventor: Liet, Cornelis Hendricus, 7581 TJ, Losser (NL)
(74) Representative: Zonneveld, Hendrik Jan

(56) References cited:
- EP-A- 1 712 123
- EP-A- 1 723 846
- NL-C- 1 026 841
- NL-C2- 1 023 476
- US-A- 3 830 438
- US-B1- 6 966 512

## Description

The invention relates to an apparatus for separating and mixing feed for livestock, which apparatus is provided with conveyor alleys with conveying means for conveying bales of feed from a supply side to a discharge side, wherein the apparatus is provided with one or more separating means for separating feed from a bale which is disposed at the discharge side of a conveyor alley.

EP 1 723 846 A describes an apparatus for separating and mixing feed for livestock, wherein a single cutting unit can be moved along several conveyor alleys, in order to cut slices off each of the bales which are present on the respective conveyor alleys.

NL 1026841 discloses an apparatus for separating and mixing feed for livestock comprises a number of units for processing feed. Each unit is provided with a space for receiving one or more bales of feed and reducing means for separating feed from the top side of a bale.

US-B-6 966 512 discloses an un-baling system for transforming rectangular bales of a farm product into smaller rectangular bales.

The invention has for its object to provide a simplified apparatus and process enabling a carefully dosed feed composition to be obtained in a relatively short period of time.

To this end, according to the invention, the apparatus is characterised by the features of claim 1. This way movable separating means are not required and several bales of feed on different conveyor alleys can be separated at the same time.

The discharge conveyor conveys the collected, separated feed to a mixing bin or a mixing robot, which may be provided with one or more mixers, such as a mixing screw. The mixing robot can move the separated and mixed feed to the feeders. One example of such a mixing robot is the Triomatic® robot manufactured by Trioliet Mullos BV.

The discharge conveyor can extend on one or both sides beneath the discharge side of the conveyor alley, so that it is prevented that separated chunks of feed will fall by the side of the conveyor belt.

The separating element can for instance be configured as a cutting unit arranged to remove a slice of feed from the end facing towards the discharge side of the bale that is present at the discharge side. The cutting unit can for instance be arranged to follow a cutting path such that the end facing towards the discharge side of the remaining part of the bale is rearwardly inclined with respect to the vertical. The cutting unit can also be arranged to remove a slice of feed according to a cutting path such that the remaining part of the bale is narrower at the upper side than at the bottom side. These measures can prevent any chunks of feed coming off the remaining part of the bale during or after the separating of feed from a bale and falling onto the discharge conveyor. The remaining part of the bale remains stably disposed on the conveyor alley.

An alternative way of ensuring that the cutting face is rearwardly inclined is for the conveyor alleys, or optionally only the discharge side of the conveyor alleys, to be set at an incline, so that the discharge side of the conveyor alley is disposed higher than the supply side. The cutting face of the separating element can then be virtually perpendicular to the conveyor alley.

The separating element can also be configured as a cutter, roller, circular rope, or saw, for instance a circular saw, chain saw, or band saw. The separating element can cut off the feed in vertical direction or at an angle, for instance in such a way that the cutting face is rearwardly inclined.

The supply means of the conveyor alleys can be provided with means for reversing the conveying direction. The conveyor alleys can then move the bales of feed away from the discharge side when a sufficient amount of feed has been separated. The bale which has been cut into can be moved back to the discharge side when a new amount of feed has to be cut off it.

The separating element can be provided with travelling means for moving the separating element between an operating position and a travelling position in which the separating element can be moved to the discharge side of a next conveyor alley. To this end the separating element can be movably mounted on a frame and be swung between an operating position in which the separating element can cut feed off a bale at hand, and a travelling position in which the separating element has been swung forward out of the way.

In one possible embodiment of an apparatus according to the invention, the separating element comprises a drive unit to which is attached a knife or saw blade extending downwards and having a length which preferably exceeds the height of a bale of feed to be processed, in which process the knife or saw blade can be moved up and down by the drive unit. The drive unit in that case can be mounted such that it can be swung out of the way on a slide which can be moved by way of a guide, in which case the knife or the saw blade is moved along the width of the discharge side of at least one conveyor alley. Within the range of the cutting face of the knife or the saw blade a rotatable separating roll or crab roller may have been mounted for continuously pushing separated feed away from the knife.

The different conveyor alleys can be used for the supply of different types of feed, such as bales of maize, various species of grass, straw, alfalfa, etc. If so desired, it is also possible for two or more of the conveyor alleys to deliver the same type of feed.

The mixing bin or mixing robot are provided with weighing means, such as weigh bars, so that the amount of each of the supplied types of feed can be accurately measured and dosed. The mixing bin can for instance be suspended from one or more weigh bars. Alternatively, the conveyor belt for the discharge of the separated feed is combined with weighing means, for instance weigh bars, so that the weight of the feed which is still travelling to the mixing bin can be added to the weight of the feed which has already been put in the mixing bin. In this way an optimised composite feed menu for the livestock to be fed can be obtained. Thus, for instance, dairy cows can be fed a different diet from tied dairy cows. It is even possible to match the menu to the individual cow.

The supply means of the conveyor alleys can for instance be configured as a conveyor alley with two or more endless conveyor chains extending between two reversible sprockets. Such a chain conveyor can be provided with carriers extending transversely to the conveying direction. The upper part of the conveyor chains can lie protected in a trough. Alternatively, the supply means of the conveyor alleys can be configured as a block slide or be provided with hydraulic conveying means.

The conveyor alleys can be provided with sideboards. Near the discharge side one sideboard may be movable transversely to the conveying direction, for instance swivellable around a vertical axis, in which case a drive unit, for instance a hydraulic cylinder, can press the board against a bale disposed at the discharge side of the conveyor alley. This enables the bale to be gripped tightly during the separating of the feed, making the cutting process more easily controllable and preventing the bale from being pulled apart.

The apparatus according to the invention can comprise a control unit, enabling automated running of the process.

The invention is further elucidated below with reference to the drawing, which provides a schematic illustration of some embodiments of the apparatus according to the invention.

Figure 1 shows, in perspective view, a first embodiment of an apparatus according to the invention.

Figure 2 shows, in top view, a second embodiment of an apparatus according to the invention.

Figure 3A shows, in top view, a third embodiment of an apparatus according to the invention.

Figure 3B shows the embodiment of Figure 3A in side view.

Figure 4 shows, in perspective view, a fourth embodiment of an apparatus not according to the invention.

Figure 5 shows a detailed view of a separating element of the embodiment of Figure 4.

Figure 6 shows, in perspective view, a fifth embodiment of an apparatus not according to the invention.

Figure 7 shows a detailed view of a separating element of the embodiment of Figure 6.

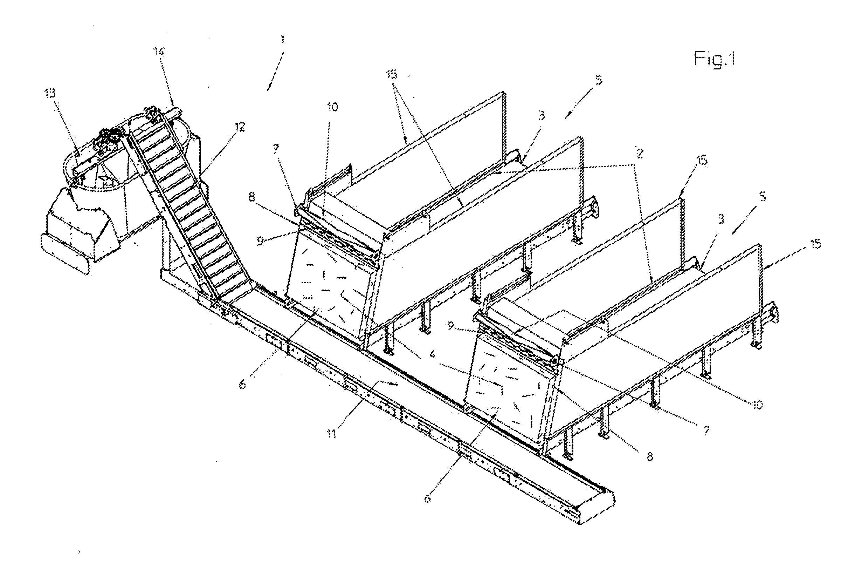

Figure 1 shows an apparatus 1 according to the invention for separating and mixing feed for livestock. The apparatus 1 is provided with conveyor alleys 2 comprising conveying means 3 for conveying bales of feed 4 from a supply side 5 to a discharge side 6. The conveying means 3 consists of a conveyor belt or, but not according to the invention, a chain conveyor provided with carriers. Near the discharge side 6 of the conveyor alleys at hand 2 the apparatus 1 is provided with a separating element 7 for separating the feed. The separating element 7 comprises a guide frame 8, along which a knife 9 can be moved up and down with the aid of driving means (not shown) at a slight angle to the vertical, so that the cutting face of the bale 4 is rearwardly inclined. Instead of a single knife, two knives can be used which are pulled towards one another in the cutting process. The separating element 7 further comprises a separating roll or crab roll 10 for pushing the separated feed away from the knife 9 and placing it on a conveyor belt 11. The separating roll 10 in that case is driven by driving means (not shown). The conveyor belt 11 travels the along the width of the discharge sides 6 of the two conveyor alleys 2, with the conveyor alleys 2 extending beyond the conveyor belt 11 for a short distance in order to prevent the possibility of separated chunks of feed falling beside the conveyor belt 11. The conveyor belt 11 conveys the feed which has been cut off and collected to a belt conveyor 12 moving in an inclined upward direction, which belt conveyor then puts the feed in a mixing bin 13. The mixing bin 13 is suspended from a weigh bar 14. The conveyor alleys 2 are additionally provided with vertical sideboards 15 on either side of the conveying means 3. The different conveyor alleys 2 can be used to supply different types of feed, but it is also possible for two or more of the conveyor alleys to convey the same type of feed. In this way it is possible to obtain an optimised composite feed menu for the livestock to be fed.

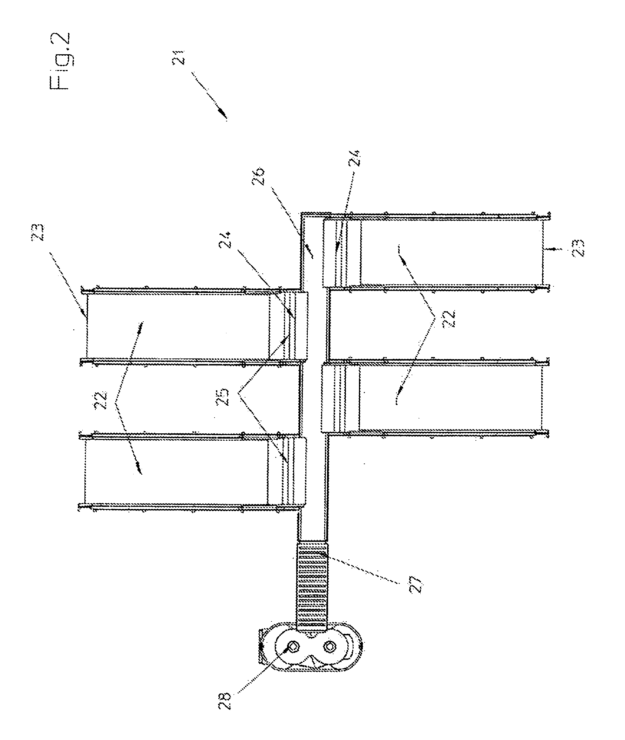

Figure 2 shows, in top view, an alternative embodiment of an apparatus according to the invention. The apparatus 21 comprises a number of conveyor alleys 22 each with a supply side 23 and a discharge side 24. The discharge side 24 of each of the conveyor alleys 22 opens into a central, shared conveyor belt 26. The conveyor alleys 22 are disposed parallel with one another, alternately on either side of the conveyor belt 26. Each of the conveyor alleys 22 is provided at the discharge side 24 with a separating element 25 shown schematically here. The separating element 25 can be configured as a cutting unit, such as a cutting knife as described in Figure 1, or a cutter, band saw or circular saw, etc. The conveyor belt 26 conveys the separated feed to a belt conveyor 27 moving in an inclined upward direction, which puts the feed in a mixing bin or mixing robot 28.

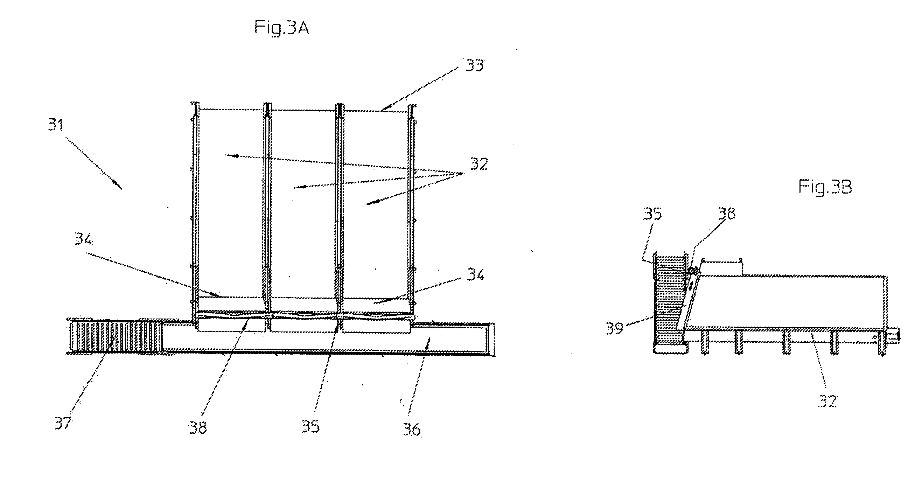

A third possible embodiment is depicted schematically in Figures 3A and 3B, in top and side view, respectively. This embodiment comprises an apparatus 31 with a number of conveyor alleys 32 disposed parallel with one another side by side, with a supply side 33 and a discharge side 34. A shared conveyor belt 36 runs along the full width of the discharge sides 34 of all conveyor alleys 32 and conveys separated feed to a belt conveyor 37 moving in an inclined upward direction, which puts the feed in a mixing bin or mixing robot (not shown). A separating element 35 extends across the entire width of the joint discharge ends 34 of the conveyor alleys 32. The separating element 35 comprises a cylindrical cutter 38, which can be moved up and down by way of a frame 39. When a desired amount of a certain type of feed has to be removed from a bale, then the supply means of the conveyor alley 32 on which the bale in question is placed are driven to convey the bale to the discharge end 34 of the conveyor alley 32 in question. When a sufficient amount has been cut off, the conveyor alley 32 can be conveyed in the opposite direction, so that the bale in question is moved away from the separating element 35. By way of a different conveyor alley 32 another bale of a different type of feed can then be conveyed towards the separating element 35 so that a desired amount can be removed from that bale next. The amounts removed fall onto the conveyor belt 36, which then passes the separated feed to the mixing bin. The conveyor belt 36, like the mixing bin, can be provided with weighing means. In this way it can be determined accurately how much feed there is in the mixing bin and on the conveyor belt 36.

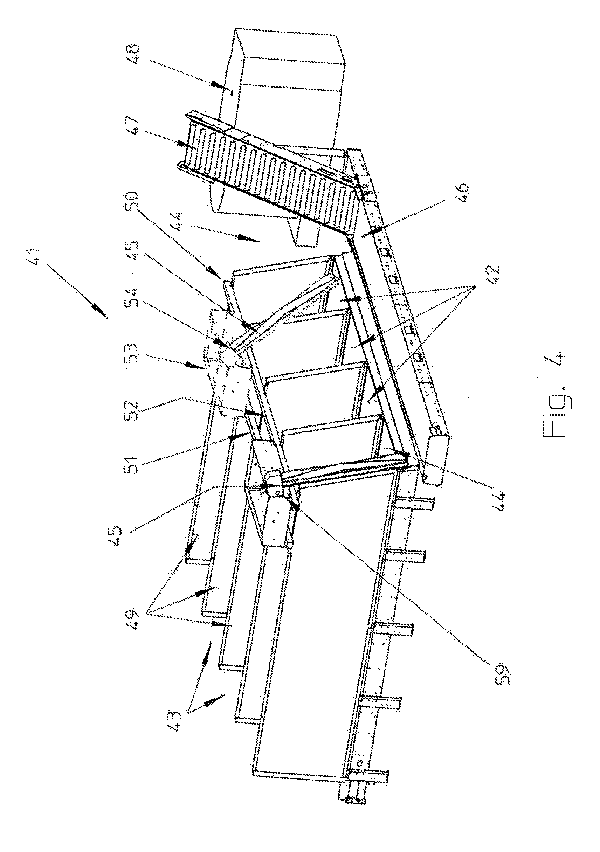

Figure 4 shows yet another possible embodiment, but not according to the invention, where an apparatus 41 is provided with conveyor alleys 42 for conveying bales of feed from a supply side 43 to a discharge side 44. Near the discharge sides 44 of the conveyor alleys at hand 42 the apparatus 41 is provided with a separating element 45 for separating the feed. A conveyor belt 46 is disposed on the discharge side 44 of each of the conveyor alleys 42. The conveyor belt 46 conveys the feed which has been cut off and collected to a belt conveyor 47 moving in an inclined upward direction, which then puts the feed in a mixing bin 48. Between the conveyor alleys 42 vertical sideboards 49 are arranged.

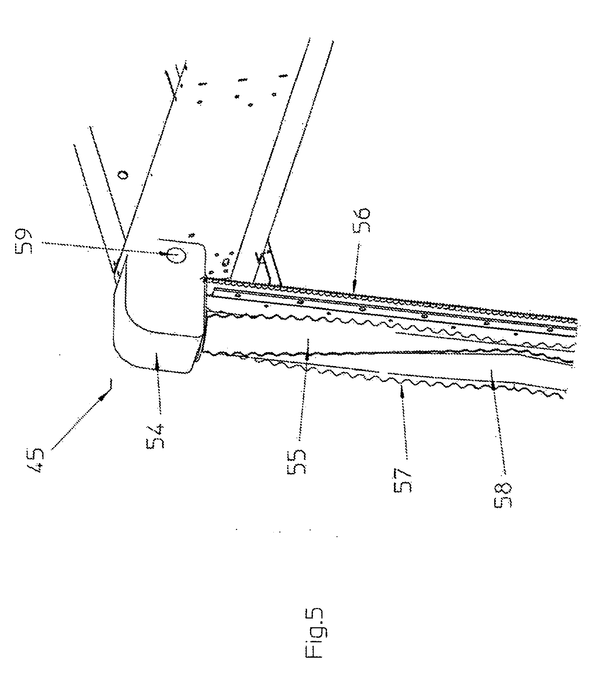

The separating element 45 comprises a guide 50 consisting of two horizontal, parallel rails 51, 52, and a slide 53, which is shown in two different positions in Figure 4. The slide 53 can be moved forward and backward by way of the guide 50 by a drive unit in the slide 53 in a direction parallel with the conveyor belt 46. To the slide 53 a drive unit 54 is hinged by means of a hinged joint 59. Figure 5 shows a drive unit 54 in more detail. By way of the hinged joint 59 the drive units 54 can be swung from an operating position out of the way to a travelling position and back again. Mounted in the drive unit 54 are one or two knives 56, which can be moved up and down with the aid of driving means (not shown). In addition, a separating roll or scraping roll 55 is mounted in the drive unit 54, which can be driven by the drive unit 54. Figure 4 shows the separating element 45 in two different positions: In the Figure with the full line the separating element 45 is in the operating position, while in the Figure with the interrupted line the separating element 45 is in the travelling position. In the operating position the knife or the knives 56 and the separating rolls 55 are suspended at a slight angle to the vertical, for instance an angle of 10 - 30 degrees. As a result, a slice is cut off the bale with a rearwardly inclined cutting face. In the travelling position the angle to the vertical is increased, so that the knife or the knives 56 and the separating roll 55 can be moved to a different conveyor alley 42 without coming into any further contact with the bale or bales on the conveyor alleys 42 disposed in between. The separating roll 55 consists of an essentially cylindrical roll 58 having a length which preferably exceeds the height of the bales from which feed is to be separated. At its circumference the cylindrical roll 56 is provided with serrated finns 57, which extend at regular interspacing in essentially axial direction, in which case they may be moving spiral-wise.

When a conveyor alley 42 supplies a bale of feed, the drive unit 54 with the separating roll 55 and the knife or the knives 56 is swung into the operating position. Next, the knife or the knives 56 are driven to cut off feed from the bale at hand and the separating roll 55 is driven to push the removed feed away from the knife or the knives 56, so that it falls onto the conveyor belt 46. When a sufficient amount of feed has been cut off the bale in question, the knife or the knives 56 and the separating roll 55 are stopped and the drive unit 54 with the knife or the knives 56 and the separating roll 55 is swung out of the way. The slide 53 can then convey the drive unit 54 with the knife or the knives 56 and the separating roll 55 by way of the guide 50 to a next conveyor alley 42, where the knife or the knives 56 and the separating roll 55 can be swung back into the operating position to enable them to cut into a new bale, for instance of a different type of feed.

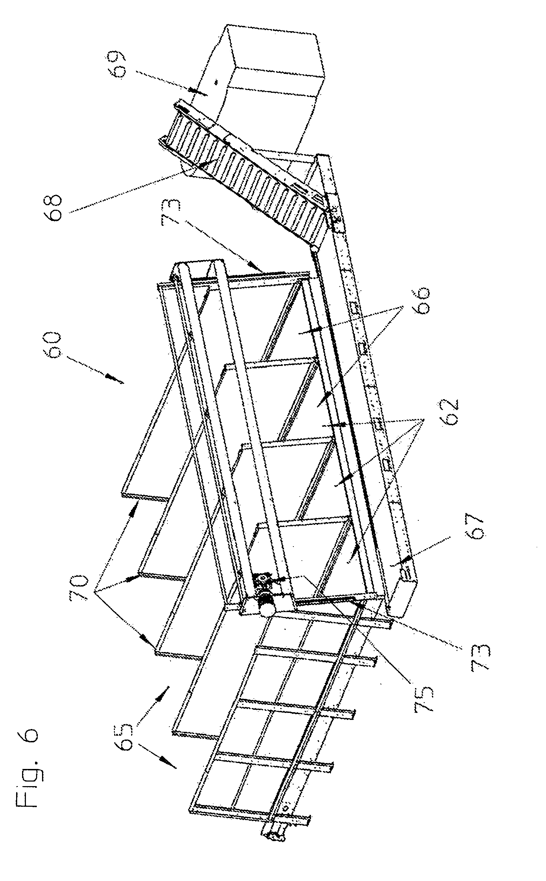

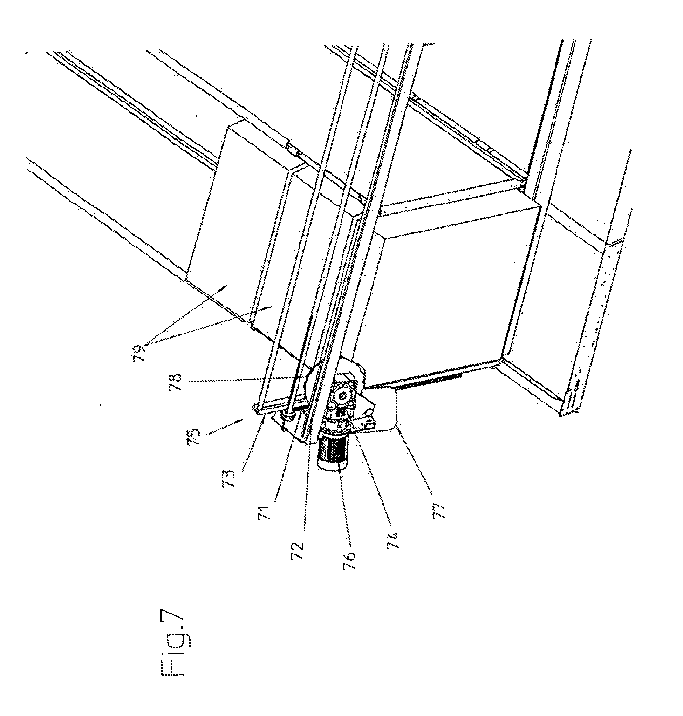

Figure 6 shows a further possible embodiment of an apparatus 60, but not according to the invention, provided with a separating element 75, which is shown in more detail in Figure 7. The apparatus 60 comprises a number of conveyor alleys 62 disposed parallel with one another, which comprise conveying means 63 for conveying bales of feed from a supply side 65 to a discharge side 66.

A conveyor belt 67 runs the full width of the discharge sides 66 of the conveyor alleys 62, with the conveyor alleys 62 extending over the conveyor belt 67 for a short distance. The conveyor belt 67 conveys the feed which has been cut off and collected to a belt conveyor 68 moving in an inclined upward direction, which then puts the feed in a mixing bin 69. Between the conveyor alleys 62 vertical sideboards 70 are arranged.

The separating element 75 consists of a guide frame 73 with a teethed guide 71 along which a drive unit 74 can be moved in a direction which is at a slight angle to the vertical. In addition, the guide frame 73 comprises a horizontal guide 72 along which the drive unit 74 can be moved in horizontal direction. In the drive unit 74 a circular saw 78 is mounted, which is driven by a drive motor 76. The drive unit 74 is further provided with a guide fence 77 to prevent the sawed off feed from being blown away and to guide the feed towards the conveyor belt.

In Figure 6 the saw 78 is engaged in cutting off feed from the top left-hand corner of a bale of feed 79. During the cutting the drive unit with the saw 78 is moved to the right in horizontal direction. On reaching the end of the bale 79, the saw 78 is moved back and moved downwards for a distance, after which the saw 78 is again moved to the right. Other cutting sequences are also possible, for instance ones with sawing from right to left, or ones where each time a vertical slice is sawed off, in which case after the sawing of each slice a saw is moved horizontally for a short distance to cut off a new vertical slice. In this way the saw 78 scans the cutting face, with the cutting face also in this embodiment preferably being rearwardly inclined and being at an angle to the vertical.

When a sufficient amount of feed has been cut off a bale, the drive unit 74 with the saw 78 can be swung out of the way, in the same way as described for the embodiment of Figures 4 and 5. The saw 78 which has been swung out of the way can then be moved to a different conveyor alley, without coming into contact with bales of feed on conveyor alleys disposed in between. If so desired, the bales may alternatively be moved away from the discharge side of the conveyor alley for a distance.

The invention is not restricted to the embodiments described hereinbefore, which can be varied in various ways within the framework of the claims.

## Claims

1. Apparatus (1) for separating and mixing a composition of different types of feed for livestock, which apparatus is provided with conveyor alleys (2) for the supply of different types of feed with conveying means (3) for conveying bales of feed from a supply side to a discharge side, wherein the apparatus is provided with separating means (7) for separating feed from a bale which is disposed at the discharge side (6) of a conveyor alley, wherein at least two of the conveyor alleys (2) are provided with their own individual separating element (7) which can be moved by way of a fixed, unmovable guide (8) along the width of the discharge side of one conveyor alley (2) to remove feed from the end facing towards the discharge side of a bale that is present at the discharge side, wherein the apparatus comprises a conveyor belt (11, 26, 36, 46, 67) which connects directly to the conveying means of the conveyor alleys and has a conveying direction which is transverse to the conveying direction of the conveying means wherein the conveyor belt is arranged for carrying separated feed to a mixing bin or mixing robot, wherein the mixing bin or mixing robot or the conveyor belt is provided with weighing means.

2. Apparatus according to claim 1, **characterised in that** the separating element comprises a cutter, a roller, an abrasive rope, a water jet or compressed air jet or a saw, such as a band saw, a circular saw, or a chain saw.

3. Apparatus according to any one of the preceding claims, **characterised in that** the conveyor alleys are provided with means for reversing the conveying direction.

4. Apparatus according to any one of the preceding claims, **characterised in that** the separating element (7, 25, 35, 45, 75) is arranged to separate feed along a rearwardly inclined cutting face.

5. Apparatus according to any one of the preceding claims, **characterised in that** within the range of the separating element a rotatable separating roll or scraping roll (10, 55) is mounted for removing separated feed from the separating element.

## Patentansprüche

1. Vorrichtung (1) zum Abtrennen und Mischen einer Zusammensetzung unterschiedlicher Arten Futter für Nutztiere, wobei die Vorrichtung mit Fördermittelbahnen (2) für die Zufuhr von unterschiedlichen Arten Futter mit Fördermitteln (3) zum Befördern von Futterballen von einer Zuführseite zu einer Ausstoßseite bereitgestellt ist, wobei die Vorrichtung mit Abtrennmitteln (7) zum Abtrennen von Futter von einem Ballen, welcher an der Ausstoßseite (6) einer Fördermittelbahn angeordnet ist, ausgestattet ist, wobei wenigstens zwei der Fördermittelbahnen (2) mit ihrem eigenen Abtrennmittel (7) ausgestattet sind, welches mittels einer feststehenden, nicht bewegbaren Führung (8) entlang der Breite der Ausstoßseite einer Fördermittelbahn (2) bewegt werden kann, um Futter von dem der Ausstoßseite zugewandten Ende eines Ballens, der an der Ausstoßseite vorhanden ist, zu entfernen, wobei die Vorrichtung ein Förderband (11, 26, 36, 46, 67) umfasst, welches direkt mit den Fördermitteln der Fördermittelbahnen verbindet, wobei das Förderband zum Tragen abgetrennten Futters zu einem Mischbehälter oder Mischroboter angeordnet ist, wobei der Mischbehälter oder Mischroboter mit Wiegemitteln ausgestattet ist.

2. Vorrichtung nach Anspruch 1, **dadurch gekennzeichnet, dass** das Abtrennelement ein Messer, eine Walze, ein Schneideseil, eine Wasserdüse oder Druckluftdüse oder eine Säge wie eine Bandsäge, eine Kreissäge oder eine Kettensäge umfasst.

3. Vorrichtung nach jedem beliebigen der vorangehenden Ansprüche, **dadurch gekennzeichnet, dass** die Fördermittelbahnen mit Mitteln zum Umkehren der Förderrichtung bereitgestellt sind.

4. Vorrichtung nach jedem beliebigen der vorangehenden Ansprüche, **dadurch gekennzeichnet, dass** das Abtrennelement (7, 25, 35, 45, 75) angeordnet ist, um Futter entlang einer nach hinten geneigten Schnittfläche abzutrennen.

5. Vorrichtung nach jedem beliebigen der vorangehenden Ansprüche, **dadurch gekennzeichnet, dass** innerhalb des Bereichs des Abtrennelements eine drehbare Abtrennwalze oder Abstreifwalze (10, 55) zum Entfernen von abgetrenntem Futter vom Abtrennelement angebracht ist.

## Revendications

1. Appareil (1) de séparation et de mélange d'une composition de différents types d'aliments destinés au bétail, lequel appareil est muni de couloirs de convoyage (2) dévolus à la délivrance de différents types d'aliments, comportant des moyens de convoyage (3) conçus pour convoyer des agglomérats d'aliments d'un côté alimentation à un côté décharge, l'appareil étant équipé de moyens séparateurs (7) conçus pour séparer des aliments d'avec un agglomérat disposé du côté décharge (6) d'un couloir de convoyage, sachant qu'au moins deux, parmi les couloirs de convoyage (2), sont pourvus de leur propre élément séparateur individuel (7) pouvant être mû à l'aide d'un guide immobile fixe (8), le long de la largeur du côté décharge de l'un des couloirs de convoyage (2), afin de prélever des aliments depuis l'extrémité pointant vers le côté décharge d'un agglomérat présent du côté décharge, l'appareil comprenant une bande convoyeuse (11, 26, 36, 46, 67) qui se rattache directement aux moyens de convoyage des couloirs de convoyage, et présente une direction de convoyage transversale à la direction de convoyage desdits moyens de convoyage, sachant que la bande convoyeuse est agencée pour transporter des aliments séparés vers une cuve de mélange ou un robot de mélange, la cuve de mélange ou le robot de mélange, ou la bande convoyeuse, comportant des moyens de pesage.

2. Appareil selon la revendication 1, **caractérisé par le fait que** l'élément séparateur comprend un sectionneur, un rouleau, un cordeau abrasif, un jet d'eau ou un jet d'air comprimé, voire une scie telle qu'une scie à ruban, une scie circulaire ou une tronçonneuse.

3. Appareil selon l'une quelconque des revendications précédentes, **caractérisé par le fait que** les couloirs de convoyage sont dotés de moyens d'inversion de la direction de convoyage.

4. Appareil selon l'une quelconque des revendications précédentes, **caractérisé par le fait que** l'élément séparateur (7, 25, 35, 45, 75) est agencé pour séparer des aliments le long d'une face de sectionnement inclinée vers l'arrière.

5. Appareil selon l'une quelconque des revendications précédentes, **caractérisé par le fait qu'**un rouleau rotatif de séparation ou un rouleau de raclage (10, 55) est monté dans la région de l'élément séparateur, en vue de dissocier des aliments séparés d'avec l'élément séparateur.
